Europäisches Patentamt

European Patent Office

Office européen des brevets

(19)

(11) Numéro de publication : **0 323 306 B1**

(12)

# FASCICULE DE BREVET EUROPEEN

(45) Date de publication du fascicule du brevet :
**08.04.92 Bulletin 92/15**

(51) Int. Cl.⁵ : **G21C 15/10,** G21C 11/06,
G21C 5/08

(21) Numéro de dépôt : **88403194.9**

(22) Date de dépôt : **15.12.88**

(54) **Réacteur nucléaire à eau sous pression et à cloisonnement massif.**

(30) Priorité : **22.12.87 FR 8717923**

(43) Date de publication de la demande :
**05.07.89 Bulletin 89/27**

(45) Mention de la délivrance du brevet :
**08.04.92 Bulletin 92/15**

(84) Etats contractants désignés :
**BE CH DE ES GB LI SE**

(56) Documents cités :
**EP-A- 0 059 130**
**EP-A- 0 117 168**
**EP-A- 0 152 206**
**EP-A- 0 184 345**

(73) Titulaire : **FRAMATOME**
**Tour Fiat 1, Place de la Coupole**
**F-92400 Courbevoie (FR)**

(72) Inventeur : **Chevereau, Gérard**
**84 Avenue Thiers**
**f-93340 Le Raincy (FR)**
Inventeur : **Cauquelin, Claude**
**3, Rue Guillaume Appolinaire**
**F-78640 Neauphle le Château (FR)**
Inventeur : **Heuze, Alain**
**39 Rue d'Amsterdam**
**F-75008 Paris (FR)**

(74) Mandataire : **Fort, Jacques et al**
**CABINET PLASSERAUD 84, rue d'Amsterdam**
**F-75009 Paris (FR)**

EP 0 323 306 B1

Jouve, 18, rue Saint-Denis, 75001 PARIS

## Description

La présente invention concerne les réacteurs nucléaires à eau sous pression du type comportant un coeur constitué par des assemblages de forme prismatique disposés côte à côte à l'intérieur d'une enveloppe de coeur cylindrique à axe vertical ménageant entre le coeur et l'enveloppe un espace dans lequel est disposé un cloisonnement massif.

On connaît déjà des réacteurs nucléaires du type ci-dessus défini. Comparé aux cloisonnements traditionnels, constitués d'un assemblage de tôles ondulées dites "baffles" formant un polyèdre entourant le coeur et de conformateurs répartis sur la hauteur du coeur, un cloisonnement massif a l'avantage d'un meilleur pouvoir réflecteur des neutrons. En effet, le cloisonnement est alors constitué essentiellement de matériaux, tels que le fer réfléchissant davantage les neutrons que l'eau.

Divers cloisonnements massifs sont connus. Le document EP-A-0 059 130 décrit un cloisonnement massif constitué de colonnes disposées côte à côte et formées de blocs modulaires empilés, solidarisés de la plaque inférieure qui supporte le coeur par des tirants. Les blocs modulaires sont solidarisés les uns des autres par des clavettes verticales, suivant une disposition rappelant celle utilisée dans les empilements de graphite des réacteurs graphite-gaz. Les blocs modulaires sont refroidis par circulation d'eau dans des canaux verticaux formés par des trous ménagés dans les blocs et situés dans le prolongement les uns des autres.

Cette solution présente des inconvénients. Le cloisonnement n'étant pas relié à l'enveloppe de coeur, il n'est pas cintré de façon précise par rapport à l'enveloppe. L'eau dans le grand nombre de canaux de refroidissement, nécessaire pour limiter les contraintes et les déformations d'origine thermique, diminue fortement le pouvoir réflecteur du cloisonnement et le débit d'eau court-circuitant le coeur diminue la température du réfrigérant à la sortie du réacteur. Les jeux entre les blocs modulaires sont le siège d'une circulation d'eau qui s'ajoute à celle dans les canaux.

Un dispositif de cloisonnement plus avantageux est décrit dans le document EP-A-0 117 168 ; il est constitué de blocs modulaires juxtaposés fixés à l'enveloppe de coeur et séparés les uns des autres par des cales de faible épaisseur. Grâce à cette disposition, on peut ajuster de façon précise le débit d'eau de refroidissement qui traverse le cloisonnement. Mais cette solution n'est pas encore parfaite, notamment du fait qu'elle utilise un grand nombre de vis fortement sollicitées et que des jeux peuvent subsister entre les blocs à proximité des assemblages combustibles et donner lieu à des jets dirigés vers certains des crayons et provoquant des phénomènes vibratoires. Le préambule de la revendication 1 est fondé sur l'état de la technique décrit dans EP-A-0152 206.

La présente invention vise à fournir un réacteur nucléaire du type ci-dessus défini, présentant un cloisonnement massif répondant mieux que ceux antérieurement connus aux exigences de la pratique, notamment en ce que la circulation de l'eau de refroidissement y est mieux organisée et en ce que la fixation des éléments constitutifs du cloisonnement est réalisée par des moyens ne présentant pas de risque de rupture sous contrainte.

Dans ce but l'invention propose un réacteur nucléaire selon la partie caractérisante de la revendication 1.

L'invention sera mieux comprise à la lecture de la description qui suit d'un mode particulier d'exécution, donné à titre d'exemple non limitatif. La description se réfère aux dessins qui l'accompagnent, dans lesquels :

– la figure 1 est une vue en perspective de dessus, montrant une fraction d'un cloisonnement massif ;

– la figure 2 est une vue en coupe verticale du cloisonnement de la figure 1 ;

– la figure 3 est une vue à grande échelle montrant deux bouchons du cloisonnement de la figure 1, en coupe suivant un plan passant par l'axe des bouchons ;

– les figures 4 et 5 sont des vues suivant les lignes IV-IV et V-V, respectivement, de la figure 3.

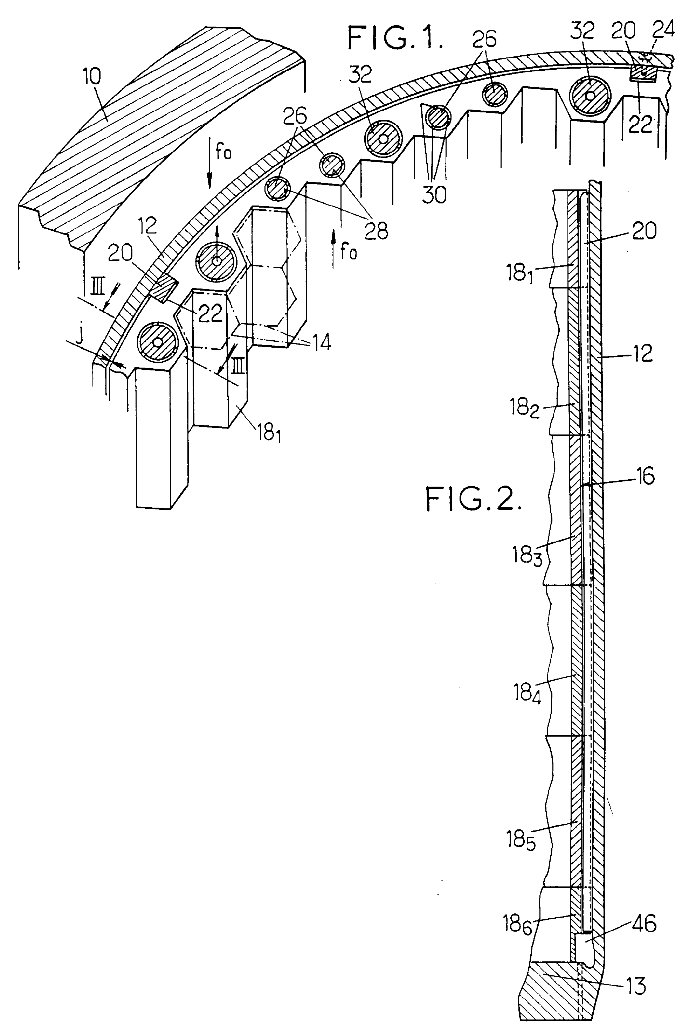

Le cloisonnement de coeur qui sera maintenant décrit est destiné à un réacteur nucléaire à eau sous pression présentant une constitution générale comparable à celle des réacteurs décrits dans les documents EP-A-0 059 130 et EP-A-0 117 168, auxquels on pourra se reporter. Ce réacteur nucléaire comprend une cuve cylindrique 10 munie d'un couvercle de fermeture (non représenté). Une enveloppe cylindrique 12 située à l'intérieur de la cuve définit avec elle un passage annulaire à travers lequel l'eau admise dans la cuve descend jusqu'au fond du réacteur avant de remonter dans le coeur. Ce coeur est constitué par des assemblages combustibles juxtaposés 14 reposant sur une plaque inférieure de coeur 13. Les assemblages dont le contour est montré en traits mixtes sur la figure 1 ont une section droite hexagonale mais l'invention serait tout aussi bien applicable à un réacteur dont les assemblages combustibles ont une section carrée.

La circulation de l'eau dans le réacteur s'effectue suivant le trajet indiqué par les flèches Fo.

Le coeur étant constitué en assemblages de section hexagonale, présente une section droite dont la périphérie présente des facettes de longueur égale à la largeur d'un côté d'assemblage. Un cloisonnement 16 occupe pratiquement tout le volume de l'espace annulaire compris entre la surface externe du coeur et la face interne de l'enveloppe 12. Il est constitué par un empilement d'anneaux dont la section a une périphérie interne épousant le contour extérieur du coeur et dont la périphérie externe est circulaire. Le diamètre de cette périphérie externe est choisi de façon qu'un jeu j subsiste entre l'enveloppe 12 et le cloisonnement.

Le nombre d'anneaux constituant le cloisonnement est choisi de façon que la masse unitaire des anneaux ne dépasse pas les possibilités de fabrication et de manutention prévue. Lorsque l'enveloppe 12 a par exemple un diamètre de 4 m environ, on pourra constituer le cloisonnement 16 en cinq ou six anneaux. Dans le cas d'un réacteur de centrale de 1300 MWe, la hauteur de chaque anneau est alors d'environ 0,9 m. Sur la figure 2 on a représenté un cloisonnement 16 constitué d'un anneau supérieur $18_1$, de quatre anneaux médians $18_2$-$18_5$ tous identiques et d'un anneau inférieur $18_6$ qui repose sur la plaque inférieure de coeur 13, soudée à l'enveloppe 12. Les anneaux seront généralement en acier inoxydable, bien que d'autres matériaux soient utilisables.

Chacun des anneaux $18_1$-$18_6$ est centré et orienté dans l'enveloppe 12 par des clavettes 20 fixées à l'enveloppe 12 et faisant saillie dans des rainures 22 ménagées longitudinalement dans les anneaux. La profondeur des rainures 22 est telle qu'un jeu subsiste entre le fond des rainures et la face non travaillante des clavettes et livre passage à un débit d'eau de refroidissement, dont la valeur est ajustable par choix du jeu.

Les clavettes 20 sont fixées à l'enveloppe 12 par tout moyen approprié, par exemple à l'aide de vis 24. Les clavettes peuvent s'étendre sur toute la longueur de l'enveloppe 12, comme indiqué sur la figure 2. Elles peuvent aussi être constituées de tronçons indépendants disjoints.

Le centrage relatif des anneaux les uns par rapport aux autres peut être complété par emboîtement des anneaux les uns dans les autres et par coulissement des anneaux sur des éléments de guidage commun s'étendant sur toute la hauteur du cloisonnement. Dans le mode de réalisation montré en figure 1, des poteaux verticaux 26 reposant sur la plaque inférieure de coeur 13 ou fixés à cette plaque traversent des passages 28 alignés de tous les anneaux. Le diamètre des passages 28 est tel qu'un jeu de circulation d'eau de refroidissement subsiste autour des poteaux pour que ce jeu soit régulier, les poteaux sont avantageusement munis d'ailettes de centrage telles que celles représentées en 30 sur la figure 1. Les clavettes 20, les poteaux 26 et éventuellement l'emboîtement des anneaux $18_1$-$18_6$ entre eux et celui de l'anneau inférieur $18_6$ sur la plaque inférieure de coeur garantissent une grande précision de mise en place.

On voit sur la figure 1 que le cloisonnement présente, du fait de la forme irrégulière de la périphérie du coeur, des parties épaisses qui ne peuvent pas être suffisamment refroidies par un canal central de faible diamètre. Le problème est résolu, dans le cas illustré en figure 1, en refroidissant ces parties par circulation d'eau dans un passage annulaire de relativement grand diamètre, mais d'épaisseur faible et régulière.

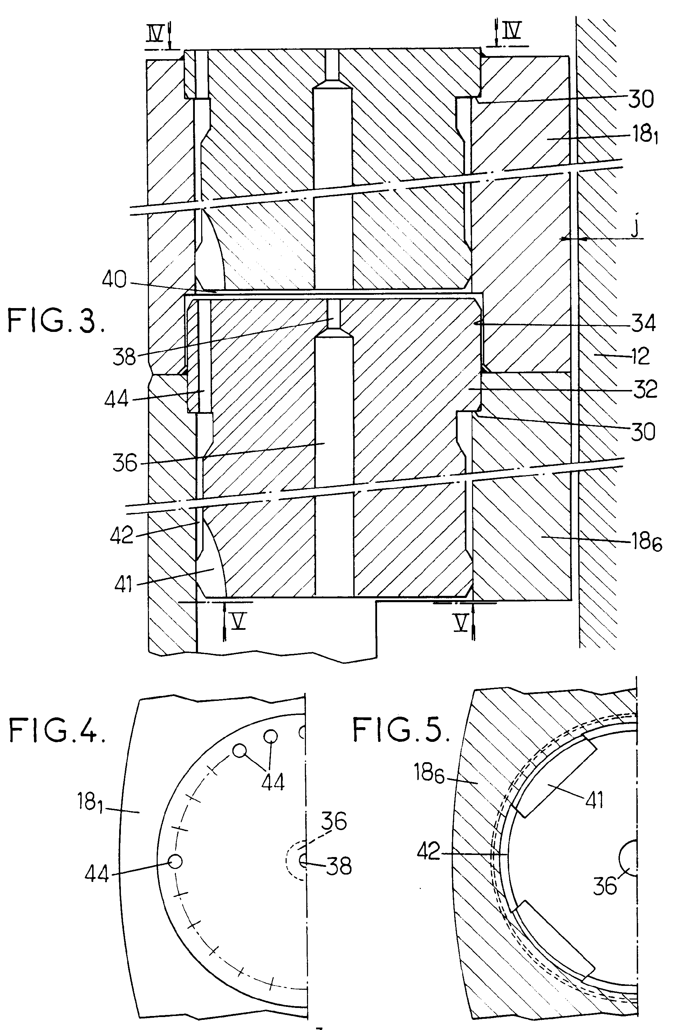

Dans l'exemple montré en figures 3 à 5, chaque anneau $18_1$ à $18_6$ comporte des trous cylindriques présentant un épaulement 30 d'appui d'un bouchon 32. Tous les bouchons, exception faite de ceux portés par l'anneau supérieur $18_1$, ont une portion en saillie vers le haut qui vient s'emboîter dans une cavité correspondante 34 de l'anneau placé au dessus. Un passage axial 36 est percé dans chaque bouchon. Il présente une zone étranglée 38 fournissant une perte de charge de réglage du débit. Entre deux bouchons successifs est réservée une chambre 40 d'équilibrage. L'ensemble des passages 36 constitue un trajet d'eau de refroidissement des bouchons alignés.

Un autre trajet est ménagé à la périphérie des bouchons. Ce trajet comprend, pour chaque anneau, des secteurs d'entrée délimités par des pans coupés 41 des bouchons, entre des saillies 42 d'appui radial et de centrage, le jeu annulaire entre trou et bouchon au dessous de l'épaulement 30 et des canaux 44 répartis à la périphérie du bouchon et débouchant dans la chambre 40. Une circulation d'eau s'établit ainsi depuis une chambre de distribution 46 ménagée par un rétrécissement annulaire du cloisonnement massif (figure 2) et la chambre de collection, au dessus du coeur.

Certains des trous ménagés dans le cloisonnement peuvent être occupés par des tirants (non représentés) servant à plaquer l'ensemble des anneaux sur la plaque inférieure de coeur 13, également refroidis par de l'eau circulant entre le tirant et le cloisonnement.

Le jeu j ménagé à froid entre la périphérie du cloisonnement et l'enveloppe 12 sera généralement, pour un réacteur de centrale de 1300 MWe d'environ 4 mm ; le jeu au droit des clavettes 20 et autour des poteaux 26 et des bouchons 32 peut être d'environ 3 mm. Le diamètre des bouchons peut être de 60 à 140 mm.

On voit que l'invention permet d'éviter toute fixation par vis, sauf pour les clavettes de centrage 20 ; les perforations du cloisonnement peuvent être en petit nombre, mais de grand diamètre, ce qui facilite leur réalisation sur de grandes profondeurs. Le risque de jets dirigés vers des crayons de combustible est écarté. Enfin, la faible valeur des jeux fait que la proportion d'eau dans le cloisonnement reste faible.

## Revendications

1. Réacteur nucléaire à eau sous pression comportant un coeur constitué par des assemblages de forme prismatique (14) disposés côte à côte à l'intérieur d'une enveloppe (12) de forme cylindrique à axe vertical ménageant entre le coeur et l'enveloppe un espace dans lequel est disposé un cloisonnement massif (16) constitué par un empilement vertical d'anneaux ($18_1$ - $18_6$) entourant chacun complètement le coeur, dont la périphérie extérieure s'engage avec un jeu (j) dans l'enveloppe (12) et dont la périphérie intérieure épouse le contour extérieur du coeur, lesdits anneaux étant centrés par rapport à l'enveloppe par des clavettes (20) fixées sur l'enveloppe et faisant saillie dans des rainures verticales (22) des anneaux et étant percés de trous verticaux alignés définissant des canaux de refroidissement, caractérisé en ce que chaque trou contient un bouchon (32) laissant subsister un passage annulaire étranglé de circulation d'eau à sa périphérie.

2. Réacteur suivant la revendication 1, caractérisé en ce que les rainures présentent une profondeur telle qu'un jeu de circulation d'eau de refroidissement subsiste entre le fond des rainures et la face non travaillante des clavettes.

3. Réacteur selon la revendication 1 ou 2, caractérisée en ce que les anneaux présentent un emboîtement les uns dans les autres.

4. Réacteur selon la revendication 1, 2 ou 3, caractérisé en ce que les anneaux comportent des passages (28) alignés de réception de poteaux verticaux (26) reposant sur une plaque inférieure de coeur (13) les poteaux présentant un jeu dans les passages et étant munis d'ailettes (30) de centrage dans les passages.

5. Réacteur selon l'une quelconque des revendications précédentes, caractérisé en ce que lesdits trous verticaux sont ménagés dans les parties épaisses des anneaux ($18_1$-$18_6$), en ce que les bouchons (32) sont portés par des épaulements (30) ménagés dans les anneaux et en ce que les passages annulaires comportent des jeux ménagés entre trou et bouchon au dessous de l'épaulement (30) et des canaux (44) répartis à la périphérie des bouchons.

6. Réacteur selon la revendication 5, caractérisé en ce que les bouchons faisant une saillie au dessus des anneaux correspondants ($18_2$-$18_6$) et s'emboîtent dans des cavités correspondantes (34) de l'anneau placé immédiatement au dessus de celui de l'anneau sur lequel ils reposent.

7. Réacteur selon la revendication 6, caractérisé en ce qu'une chambre d'équilibrage (40) est ménagée entre la face supérieure d'un bouchon et la face inférieure du bouchon situé au dessus.

8. Réacteur selon l'une quelconque des revendications précédentes, caractérisé en ce que les bouchons présentent également des passages axiaux alignés (36) ayant chacun une zone étranglée (38).

9. Réacteur selon l'une quelconque des revendications précédentes, caractérisé en ce que la hauteur de chaque anneau est d'environ 0,9 m.

## Patentansprüche

1. Druckwasserkernreaktor mit einem Reaktorkern, bestehend aus prismenförmigen Brennelementkassetten (14), die nebeneinander im Inneren einer zylinderförmigen Hülle (12) mit vertikaler Achse angeordnet sind, die zwischen dem Reaktorkern und der Hülle einen Zwischenraum bildet, in dem eine massive Zwischenwand (16) angeordnet ist, die aus einem vertikalen Stapel von Ringen ($16_1$ - $16_6$) besteht die jeweils den Kern vollständig umschließen und dessen äußerer Umfang mit Spiel (j) in der Hülle (12) angeordnet ist und dessen innere Mantelfläche die äußere Kontur des Reaktorkerns einnimmt, wobei die Ringe bezüglich der Hülle mittels Schließteile (20) zentriert ist, die auf der Hülle befestigt sind und in vertikale Nuten (20) der Ringe eingreifen und mit vertikalen ausgerichteten Löchern versehen sind, die die Kühlmittelkanäle bilden, **dadurch gekennzeichnet**, daß jedes Loch einen Verschluß (32) aufweist, der einen schmalen ringförmigen Durchgangsspalt für den Wasserdurchfluß an seinem Umfang offen läßt.

2. Reaktor nach Anspruch 1, dadurch gekennzeichnet, daß die Nuten eine Tiefe haben, die so gewählt ist, daß zwischen dem Boden der Nuten und der sich nicht bewegenden Fläche der Schließteile ein Spalt für die Zirkulation von Kühlwasser bestehen bleibt.

3. Reaktor nach Anspruch 1 oder 2, dadurch gekennzeichnet, daß die Ringe ineinander gesteckt sind.

4. Reaktor nach einem der Ansprüche 1, 2 oder 3, dadurch gekennzeichnet, daß die Ringe ausgerichtete Durchgänge (28) zur Aufnahme von vertikalen Säulen (26) aufweisen, die auf einer unteren Platte des Reaktorkerns (13) ruhen, wobei die Säulen in den Durchgängen mit Spiel angeordnet sind und mit Flügeln (30) zu ihrer Zentrierung in den Durchgängen versehen sind.

5. Reaktor nach einem der vorstehenden Ansprüche, dadurch gekennzeichnet, daß die vertikalen Löcher in den dickeren Bereichen der Ringe ($18_1$-$18_6$) angeordnet sind und dadurch, daß die Verschlüsse (32) von Schultern (30) getragen werden, die in die Ringe eingearbeitet sind und dadurch, daß die ringförmigen Durchgänge Zwischenräume zwischen dem Loch und dem Verschluß unterhalb der Schulter (30) sowie Kanäle (44) aufweisen, die an der Mantelfläche der Verschlüsse angeordnet sind.

6. Reaktor nach Anspruch 5, dadurch gekennzeichnet, daß die Verschlüsse oberhalb der entsprechenden Ringe ($18_2$-$18_6$) vorstehen und in entsprechende Vertiefungen (34) des Rings eingreifen, der unmittelbar über dem Ring angeordnet ist, in dem die Verschlüsse liegen.

7. Reaktor nach Anspruch 6, dadurch gekennzeichnet, daß ein Wasserschloß (40) zwischen der oberen Fläche eines ersten Verschlusses und der unteren Fläche des Verschlusses, der oberhalb des ersten Verschlusses angeordnet ist, vorgesehen ist.

8. Reaktor nach einem der vorstehenden Ansprüche, dadurch gekennzeichnet, daß die Verschlüsse ebenfalls ausgerichete axiale Durchgänge (36) haben, die jeweils eine verengte Zone (38) aufweisen.

9. Reaktor nach einem der vorstehenden Ansprüche, dadurch gekennzeichnet, daß jeder Ring etwa 0,9 m hoch ist.

## Claims

1. Pressurized water nuclear reactor having a core formed by assemblies (14) of prismatic shape disposed side by side inside a cylindrical casing (12) with a vertical axis, defining between the core and the casing a space in which a solid partitioning (16) is disposed, formed by a vertical stack of rings ($18_1$-$18_6$) each completely surrounding the core, whose external periphery is engaged with a clearance (j) in the casing (12) and whose internal periphery matches the external contour of the core, said rings being centered with respect to the casing by keys (20) fixed to the casing and projecting into vertical grooves (22) formed in the rings and being formed with vertical mutually aligned holes defining cooling channels, characterized in that each hole contains a plug (32) which maintains an annular restricted water flow passage at the periphery thereof.

2. Reactor according to claim 1, characterized in that the grooves have a depth such that a clearance for a flow of cooling water exists between the bottom of the grooves and the non-working face of the keys.

3. Reactor according to claim 1 or 2, characterized in that the rings are mutually engaging.

4. Reactor according to claim 1, 2 or 3, characterized in that the rings have mutually aligned passages (28) for receiving vertical posts (26) resting on a lower core plate (13), the posts presenting a clearance in the passages and being provided with fins (30) for centering in the passages.

5. Reactor according to any one of the preceding claims, characterized in that said vertical holes are formed in the thicker parts of the rings ($18_1$ - $18_6$), in that the plugs (32) are carried by shoulders (30) formed in the rings and in that the annular passages include clearances formed between hole and plug below the shoulder (30) and channels (44) spaced apart at the periphery of the plugs.

6. Reactor according to claim 5, characterized in that the plugs project above the corresponding rings ($18_1$-$18_6$) and fit into corresponding cavities (34) of the ring placed immediately above that of the ring on which they rest.

7. Reactor according to claim 6, characterized in that a balancing chamber (40) is formed between the upper face of a plug and the lower face of the plug situated above.

8. Reactor according to any one of the preceding claims, characterized in that the plugs further include aligned axial passages (36) each having a restricted zone (38).

9. Recto according to any one of the preceding claims, characterized in that the height of each ring is about 0.9m.

FIG.1.

FIG.2.

FIG.3.

FIG.4.

FIG.5.